# EUROPÄISCHE PATENTSCHRIFT

(11) **EP 1 726 403 B1**
(45) Veröffentlichungstag und Bekanntmachung des Hinweises auf die Patenterteilung: **09.06.2010**
(21) Anmeldenummer: 06010448.6
(22) Anmeldetag: 20.05.2006
(51) Int. Cl.: B25B 5/08

(54) **Klemmhebel mit höhenverstellbarem Gegenlager**
Lever with height adjustable stop
Levier avec butée reglable en hauteur

(30) Priorität: 25.05.2005 DE 102005024014
(43) Veröffentlichungstag der Anmeldung: 29.11.2006
(73) Patentinhaber: Otto Ganter GmbH & Co. KG Normteilefabrik, 78120 Furtwangen (DE)
(72) Erfinder: Ganter, Bernhard, 78120 Furtwangen (DE)
(74) Vertreter: Riebling, Peter

(56) Entgegenhaltungen:
- DE-A1- 1 784 610
- DE-A1- 19 517 278
- US-A- 5 156 508
- US-A- 5 158 331

## Beschreibung

Gegenstand der Erfindung ist ein Klemmhebel mit höhenverstellbarem Gegenlager, dessen Querbohrung sich im Bereich des Spannhebels nicht ausschafft und das der Spannhebel immer eine maximale Klemmkraft aufweist.

Ein Klemmhebel nach dem Oberbegriff des geltenden Anspruches 1 wird für verschiedene Klemmaufgaben verwendet. Ein typisches Beispiel ist die Ausbildung eines solchen Klemmhebels als Exzenter-Spannhebel, worauf die Erfindung jedoch nicht beschränkt ist. Ein Klemmhebel gemäß dem Oberbegriff des Anspruchs 1 ist aus der US 5 158 331 bekannt.

Derartige Exzenter-Spannhebel werden für Klemmaufgaben in der Maschinenindustrie verwendet, jedoch genauso auch beispielsweise zur Festlegung von Fahrradnaben an der Vorder- oder Hinterradgabel eines Fahrrades.

Wenn in der folgenden Erfindungsbeschreibung von einem Exzenter-Spannhebel die Rede ist, so wird nochmals darauf hingewiesen, dass die Erfindung hierauf nicht beschränkt ist. Statt einer exzentrischen Spannfläche können auch sogenannte spiralförmige Spannflächen verwendet werden.

Bei den genannten Klemmhebeln nach dem Stand der Technik soll der Klemmhebel von seiner möglichst aufgerichteten, ungespannten Lage in eine heruntergeklappte, gespannte Lage gebracht werden. Die Löseposition wird nämlich insbesondere dadurch gekennzeichnet, dass sich der handbedienbare Hebel in einer aufrechten Schwenklage befindet, während die Spannstellung bevorzugt so gekennzeichnet werden soll, dass der Klemmhebel in einer etwa horizontalen Spannlage ist. Durch diese beiden Endlagen (Lösestellung und Spannstellung) werden ergonomisch die besten Ergebnisse erzielt.

Nachteil der bekannten Klemmhebel ist jedoch, dass für bestimmte Spannaufgaben es nicht immer möglich ist, den Klemmhebel in seiner gespannten Stellung in seine günstigste Stellung (bevorzugt horizontale Stellung) zu bringen.

Wenn also von der Klemmstellung die Rede ist, so ist damit gemeint, dass der Klemmhebel in seine maschinenbautechnisch günstigste Schwenkbewegung gebracht wird, d. h. der Klemmhebel soll in der Spannstellung nicht im Weg sein, er soll ergonomisch die günstigste Position haben und, bei der Ausführung als Exzenter, die größte Spannkraft erzielen.

Bisher hat man dieses Problem dadurch gelöst, indem man im Bereich des Querbolzens, welcher als Schwenklager für den Klemmhebel dient, eine Gewindebohrung angeordnet hat, wobei in den Querbolzen ein Spannbolzen eingriff, der mit seinem Gewinde im Bereich des Querbolzens höhenverstellbar ausgebildet war.

Damit bestand die Möglichkeit, dass zur Festlegung einer bestimmten Spannlage der Klemmhebel erst verdreht werden konnte, um so den Spannbolzen in eine günstige Spannposition zu bringen und dann erst den Klemmhebel umzulegen, um diesen zu spannen.

Dabei muss allerdings in Kauf genommen werden, dass die Spannstellung des Spannhebels für die Bedienung ungünstig sein kann.

In einer anderen Ausgestaltung der Erfindung ist es bekannt, den Zugbolzen selbst, der zur Spannung zwischen den zu spannenden Flächen verwendet wird und diese Flächen durchgreift, höhenverstellbar in diesen Flächen auszubilden.

Durch Verdrehung dieses als Gewindebolzen ausgebildeten Zugbolzens konnte somit auch vor Umlegen des Spannhebels die Spannstellung eingestellt werden.

Eine dritte bekannte Ausführungsform sieht zur Einstellung der Spannhöhe einen Zugbolzen vor, der durch beiden zu spannenden Platten oder Elemente mit einer durchgehenden Bohrung hindurchgeht und der an seinem freien unteren Ende ein Gewinde trägt, auf das eine Mutter aufgeschraubt ist. Durch Verstellen dieser Mutter kann somit auch die Spannhöhe eingestellt werden.

Die genannten Ausführungsbeispiele leiden unter dem Nachteil, dass die Spannhöhe nur dann verstellt werden kann, wenn man an die Unterseite des Gewindebolzens und die dort angeordnete Gewindemutter herankommt.

Bei der anderen geschilderten Ausführungsform, bei der der Gewindebolzen durch den Querbolzen des Spannhebels hindurchgreift und dort eine Höheneinstellung des Spannlagers möglich ist, besteht der Nachteil, dass eine feinfühlige Einstellung der Höhenlage des Spannlagers nicht möglich ist. Diese Einstellung hängt von der Gewindesteigung des den Querbolzen durchgreifenden Zugbolzens ab, was mit Nachteilen verbunden ist. Durch entsprechende Verdrehung im Bereich der Gewindesteigung kann deshalb auch wieder eine ungünstige, unerwünschte Spannstellung erreicht werden.

Im übrigen wird durch die den Querbolzen durchsetzende Gewindebohrung der Querschnitt des Querbolzens geschwächt und hierdurch wird die gesamte Klemmübertragung nicht mehr sicher.

Weiterhin weisen die vorbenannten Ausführungsformen einer Spannvorrichtung den Nachteil auf, dass aufgrund der Drehlagerung des Schwenkhebels mit einem Lagerbolzen die Lagerbohrung im Schwenkhebels aufgrund der vielfach ausgeführten Schwenkbewegung des Schwenkhebels sich ausschafft oder ausleiert, da der Lagerbolzen in der Lagerbohrung eine Reibwirkung ausführt.

Ferner ist es wichtig, dass der Spannhebel eine Schwenkwinkelbegrenzung aufweist.

Zu diesem Zweck hat der erfindungsgemäße Spannhebel an seinem inneren Gabelende, und zwar an der Stirnseite des Gabelende, eine Schräge gegenüber dem gegenüberliegenden Kopf eines angeordneten Kopfbolzens.

Diese Schräge weist eine untere Kante auf, die bei der Erreichung des maximalen Schwenkweges des Spannhebels an der äußeren Oberfläche des Kopfbolzens anschlägt.

Mit diesen Merkmalen ist der Vorteil erreicht, dass der Bediener beim Erreichen des Festanschlages, d. h. wenn der Spannhebel in seiner maximal heruntergeschwenkten Position ist, damit sichergestellt ist, dass auch die maximale Klemmkraft erzielt ist.

Der Erfindung liegt deshalb die Aufgabe zugrunde, einen Klemmhebel mit höhenverstellbarem Gegenlager so weiterzubilden, dass der sich die Querbohrung im Bereich des Spannhebels nicht ausschafft und das der Spannhebel immer eine maximale Klemmkraft aufweist und gleichzeitig die Bauteile des Klemmhebels verliersicher miteinander zu verbinden.

Diese Aufgabe wird durch einen gattungsgemäßen Klemmhebel mit den Merkmalen des Kennzeichens des Anspruchs 1 gelöst. Mit der gegebenen technischen Lehre ergibt sich der wesentliche Vorteil, dass die Lagerbohrungen im Spannhebel aufgrund des verdrehgesicherten Lagerbolzen nicht mehr ausschaffen und ausleiern.

Weiterhin ist ein wesentlicher Vorteil, dass aufgrund der Schwenkwinkelbegrenzung der Spannhebels dieser in seiner heruntergeschwenkten Position die maximale Klemmkraft erreicht.

Zusätzlich ergibt sich durch die Höheneinstellung des Gegenlagers der Vorteil, dass man nun nicht mehr auf die ungünstige Gewindesteigung des Zugbolzens angewiesen ist, der eine lediglich grobe Einstellung der Höhenlage des Klemmhebels ermöglicht.

Mit der Anordnung eines höhenverstellbaren Gegenlagers für den Klemmhebel ergibt sich somit der Vorteil, dass man sehr feinfühlig einstellen kann, denn in einer bevorzugten Ausgestaltung der Erfindung ist es vorgesehen, dass für die Höheneinstellung ein Feingewinde verwendet wird, welches bei relativ großer Verdrehung nur ein geringes Höheneinstellspiel ermöglicht.

Es ist vorgesehen, dass der Lagerbolzen (Querbolzen) in der Querbohrung des Spannhebels verdrehgesichert angeordnet ist, in dem dieser fest in der Querbohrung angeordnet ist, wie zum Beispiel als eine Art Presssitz oder durch ein vorgesehene Deformation des Querbolzens, wenn dieser in der Querbohrung angeordnet ist.

Darüber hinaus ist vorgesehen, dass der Spannhebel eine Schwenkwinkelbegrenzung aufweist, welche gewährleistet, dass der Spannhebel seine maximale Klemmkraft aufweist, wenn dieser seine maximale, herunterschwenkbare Position eingenommen hat.

Weiterhin ist es vorgesehen, dass eine Stellmutter 9 freidrehbar auf der Klemmplatte angeordnet ist und dass diese Stellmutter ein Innengewinde aufweist, in welches das Außengewinde einer Auflagescheibe 10 eingreift, die somit in Bezug auf die Stellmutter höheneinstellbar ausgebildet ist.

Die Auflagescheibe, die in der Stellmutter 9 höhenverstellbar gehalten ist, bildet dann das Gegenlager bzw. die Spannfläche für die Spannkontur des Klemmhebels.

Diese Auflagescheibe ist nun erfindungsgemäß höheneinstellbar ausgebildet, weil sie mit ihrem Außengewinde in ein zugeordnetes Innengewinde der auf der Klemmplatte aufliegenden Stellmutter eingreift.

In kinematischer Umkehrung dieser Ausführungsform kann es jedoch auch vorgesehen sein, dass am Außenumfang der Stellmutter ein Außengewinde angeordnet ist und dass auf dieses Außengewinde die etwa im Querschnitt c-förmige Auflagescheibe übergreift und in dieses Außengewinde mit einem zugeordneten Innengewinde eingreift und ebenfalls dort höheneinstellbar gehalten ist.

Im Folgenden wird die Erfindung anhand von mehrere Ausführungswege darstellenden Zeichnungen näher erläutert.

Es zeigen:
- Figur 1:: schematisiert eine erste Ausführung der Erfindung in Spannstellung;
- Figur 2:: eine zweite Ausführungsform im Schnitt;
- Figur 3:: eine nach Figur 2 ausgebildete Ausführung, jedoch ohne Darstellung des Gewindebolzens beziehungsweise mit Innengewinde;
- Figur 4:: den Querschnitt durch die Stellmutter;
- Figur 5:: die Seitenansicht der Stellmutter;
- Figur 6:: die Draufsicht auf die Stellmutter;
- Figur 7:: die Draufsicht auf den Klemmhebel;
- Figur 8:: die Seitenansicht des Kopfbolzens;
- Figur 9:: der Schnitt durch den Kopfbolzen;
- Figur 10:: die perspektivische Seitenansicht des Kopfbolzens;
- Figur 11:: die Seitenansicht der Auflagescheibe;
- Figur 12:: die Draufsicht auf die andere Auflagescheibe;
- Figur 13:: Schnitt durch die Auflagescheibe;
- Figur 14:: perspektivische Seitenansicht der Auflagescheibe;
- Figur 15:: eine erste Darstellung einer Ausführung mit einer minimal eingestellten Stellmutter bei gespanntem Klemmhebel;
- Figur 16:: die gleiche Darstellung wie Figur 15, jedoch mit einer maximal eingestellten Stellmutter;
- Figur 17:: die Stellung des Klemmhebels nach Figur 15 in ungespanntem Zustand;
- Figur 18:: die Stellung des Klemmhebels nach Figur 16 in ungespanntem Zustand.

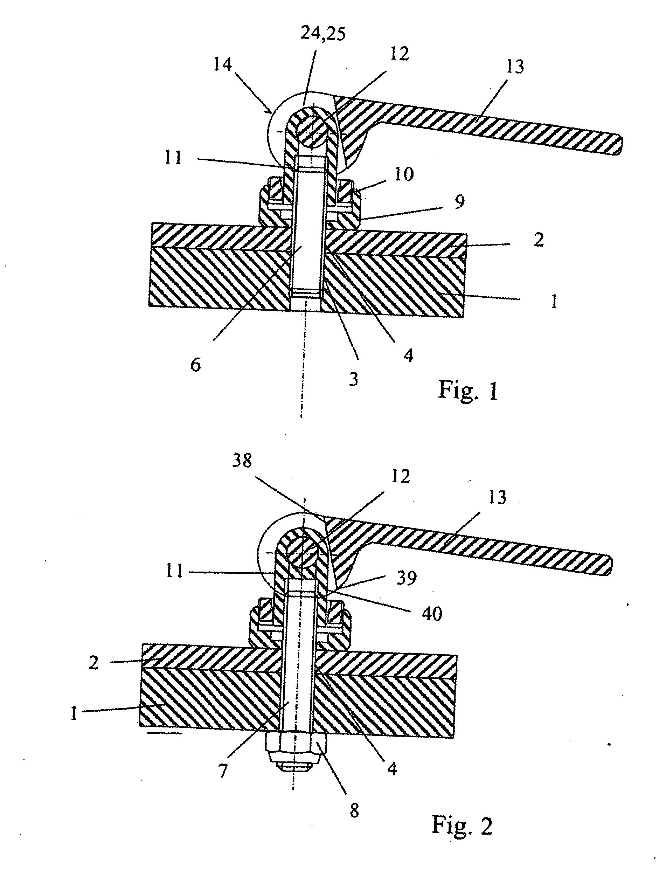

In den Figuren 1 und 2 ist grundsätzlich dargestellt, dass auf einer Grundplatte 1 eine Klemmplatte 2 geklemmt werden soll. Im Ausführungsbeispiel nach Figur 1 ist hier bei einer Grundplatte 1 eine Gewindebohrung 3 angeordnet, in welche der Gewindebolzen 6 mit einem zugeordneten Außengewinde eingreift. Der Gewindebolzen 6 durchgreift im übrigen die unvorbereitete Bohrung 4 in der Klemmplatte 2 mit Spiel.

Das obere Ende des Gewindebolzens 6 ist hierbei in das Innengewinde eines Kopfbolzens 11 eingeschraubt, der in seinem oberen Bereich eine Querbohrung 27 trägt, die von einem Querbolzen 12 durchgriffen ist. Dieser Querbolzen 12 bildet das Drehlager für den Spannhebel 13.

Zusätzlich weist der Spannhebel 13 eine zwischen den zwei Schenkeln des Spannhebels 13 ausgearbeitete Schräge 38 auf.
Die untere Kante 39 an der Schräge 38 schlägt bei Erreichen des maximalen Schwenkweges des Spannhebels 13 an der äußeren Oberfläche des Kopfbolzens 11 an, welches in Figur 2 als Anschlagfläche 40 bezeichnet ist.

Es versteht sich von selbst, dass der Gewindebolzen 6 auch einstückig mit dem Kopfbolzen 11 ausgebildet sein kann.

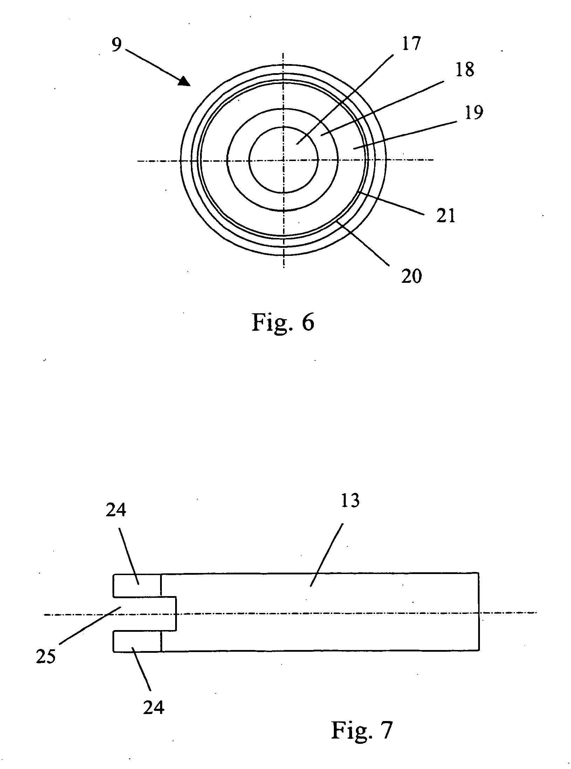

Der Spannhebel 13 umgreift gemäß Figur 7 mit zwei Klemmteilen 24 den Querbolzen 12 und bildet an seinem Außenumfang eine Spannkontur 14.

Im gezeigten Ausführungsbeispiel ist diese Spannkontur als Spirale ausgebildet, d. h. die Steigung der Spannkontur 14 ist gleichmäßig zunehmend über den gesamten Schwenkwinkel des Spannhebels 13 in Bezug auf die Drehachse.

Statt einer solchen spiraligen Spannkontur 14 kann auch eine Exzenter-Spannfläche verwendet werden.

Ebenso können rastende Spannflächen verwendet werden, bei denen im Bereich der Spannkontur 14 bestimmte Vorsprünge und Noppen, Riefen oder dergleichen angeordnet sind.

In dem Ausführungsbeispiel nach Figur 1 wird das höheneinstellbare Klemmlager für den Spannhebel 13 durch eine auf der Klemmplatte 2 aufsitzende Stellmutter 9 gebildet, die frei verdrehbar ist und aus einer im Innengewinde der Stellmutter 9 eingeschraubten Auflagescheibe 10, die somit höheneinstellbar in Bezug zur Stellmutter 9 ausgebildet ist.

Die Figur 2 zeigt als weiteres Ausführungsbeispiel ein gleiches höheneinstellbares Klemmlager, wo jedoch die Verbindung mit der Grundplatte 1 anders gelöst ist. Hier ist anstatt des Gewindebolzens 6 ein Zugbolzen 7 vorgesehen, der die unvorbereiteten und zueinander fluchtenden Bohrungen in der Grundplatte 1 und der Klemmplatte 2 durchsetzt und der an seinem vorderen freien Ende ein Gewinde trägt, auf das eine Mutter 8 aufgeschraubt ist.

Statt der gezeigten Mutter 8 kann auch ein Schraubenkopf vorgesehen werden.

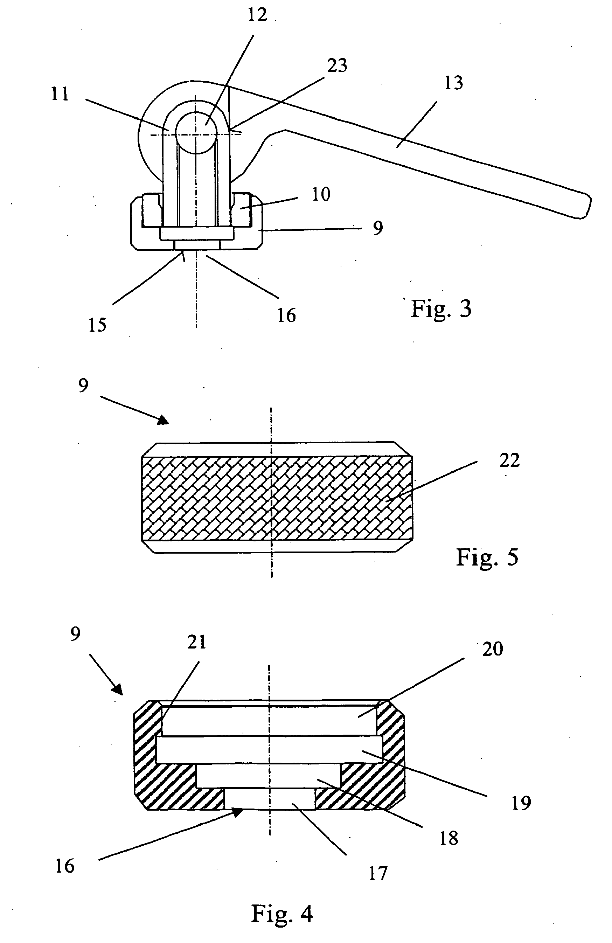

Die Figur 3 zeigt eine ähnliche Ausführungsform wie Figur 1, wo erkennbar ist, dass die Unterseite der Stellmutter 9 als Spannfläche 15 ausgebildet ist, mit der diese auf der Klemmplatte 2 aufliegt.

Ebenso ist erkennbar, dass im Bereich der Stellmutter 9 eine Durchgangsbohrung 16 vorhanden ist. Der Aufbau dieser Durchgangsbohrung 16 ist in den Figuren 4 bis 6 näher dargestellt.

Die Durchgangsbohrung 16 ist insgesamt aus vier verschiedenen Bohrungsdurchmessern gebildet, nämlich einem Bohrungsdurchmesser 17 relativ kleinen Durchmessers, der in einen Bohrungsdurchmesser 18, dieser wiederum in einen Bohrungsdurchmesser 19 und diese wiederum in einen Bohrungsdurchmesser 20 übergeht.

Der Bohrungsdurchmesser 19 dient nur zur Freistellung bei der Fertigung des Innengewindes 21 am Innenumfang des Bohrungsdurchmessers 20.

Auf die innere Stirnseite des Bohrungsdurchmessers 18 sitzt dann im montierten Zustand der Ansatz 29 des Kopfbolzens 11 auf. Der Durchmesser des Ansatzes 29 im Kopfbolzen 11 erstreckt sich jedoch über die gesamte Länge des Kopfbolzens.

Der Bohrungsdurchmesser 17 entspricht der lichten Weite des Gewindebolzens 6.

Ebenso ist es möglich, die Auflagescheibe 10 werkstoffeinstückig mit der Stellmutter (9) auszuführen, um eine zusätzliche Verdrehsicherheit und Unverlierbarkeit zu gewährleisten.

In Figur 5 ist noch dargestellt, dass der Außenumfang der Stellmutter 9 eine Rändelfläche 22 trägt.

Statt einer Rändelfläche kann auch eine Schlüsselweite angeordnet werden, um eine leichte Verdrehbarkeit der Stellmutter 9 zu gewährleisten.

Die Figur 7 ― bereits schon oben erwähnt ― zeigt zwischen den beiden parallel zueinander angeordneten Klemmteilen 24 eine Ausnehmung 25, welche den Kopfbolzen 11 umgreift.

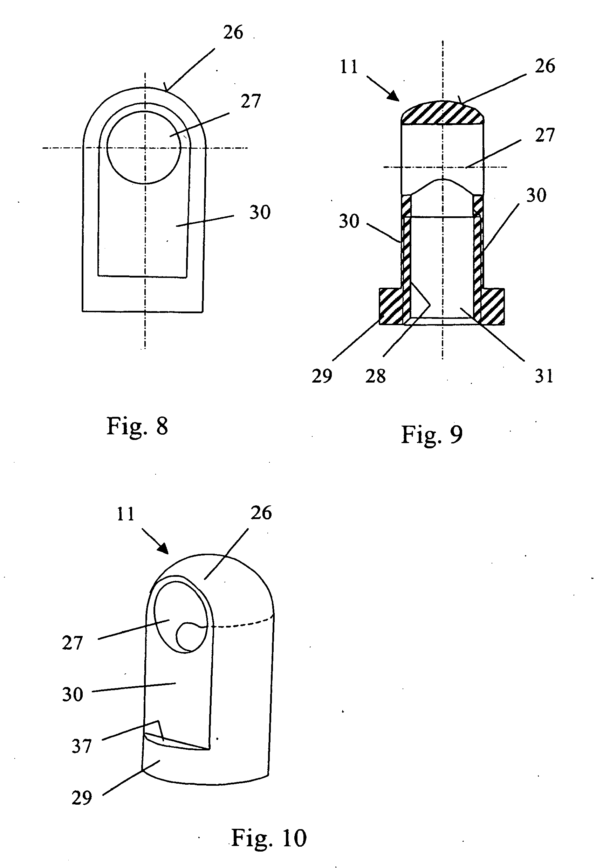

In Figur 8 bis 10 ist die Formgebung des Kopfbolzens 11 dargestellt. Er besteht im wesentlichen aus einem rundzylindrischen Bolzen, der an seiner Unterseite den Ansatz, der sich mit seinem Durchmesser sich über die gesamte Länge des Kopfbolzens 11 erstreckt und an der Unterseite den Ansatz 29 trägt.

Im Bereich jenseits des Ansatzes 29 sind hierbei jedoch zwei zueinander parallele Seitenflächen 30 angeordnet, die eine geringere Weite aufweisen als vergleichsweise der Ansatz 29.
Zusätzlich ist dadurch sichergestellt, dass die Spannkontur 14 des Spannhebels in die halbrunden Klemmflächen 35 der Auflagefläche 10 eingreift beziehungsweise diesen zugeordnet ist.

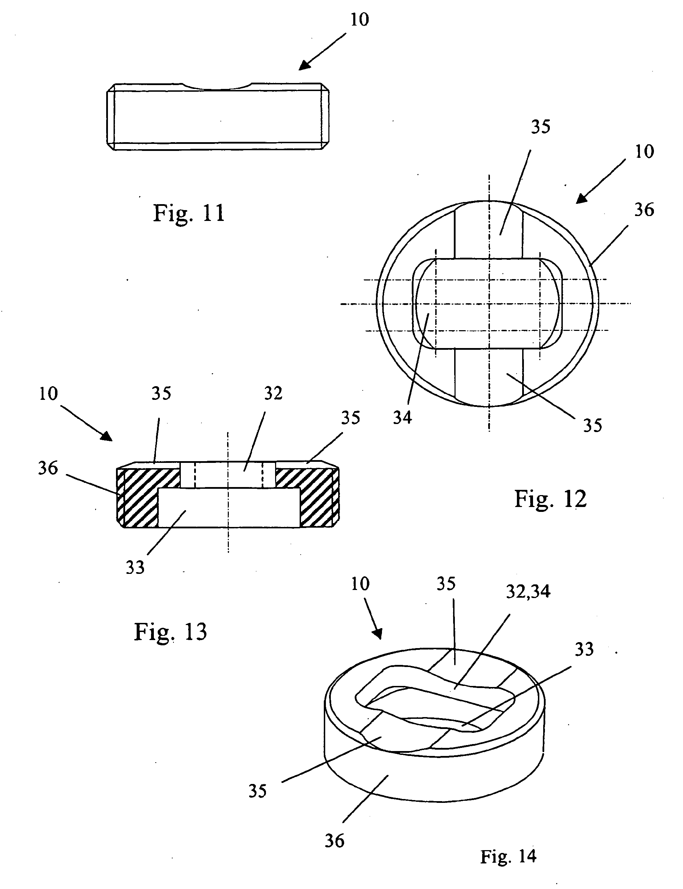

Sinn dieser Maßnahme ist, den Kopfbolzen verdrehungsgesichert durch eine zugeordnete und in der Formgebung angepasste Ausnehmung 32, in der in den Figuren 11 bis 14 dargestellten Auflagescheibe 10 hindurchgreifen zu lassen.

Wichtig ist auch noch, dass in der Längsbohrung 31 des Kopfbolzens 11 ein Innengewinde 28 vorhanden ist, in welches beispielsweise die Bolzen 6, 7 eingeschraubt sind.

Es versteht sich von selbst, dass jede Verdrehsicherung zwischen dem Kopfbolzen 11 und der zugeordneten Auflagescheibe 10 verwendet werden kann. Es kann deshalb jede formschlüssige, lösbare Verbindung zwischen den beiden Teilen 10, 11 verwendet werden.

Wichtig ist nur, dass die Auflagescheibe 10 entlang der axialen Länge des Kopfbolzens 11 frei verschiebbar ist.

Die obere Stirnseite des Kopfbolzens 11 ist als Rundteil 26 ausgebildet, um so durch die Ausnehmung 25 im Spannhebel 13 hindurchzugreifen.

Im Bereich des Schwenkweges des Spannhebels 13 ist im übrigen eine Anschlagfläche 23 vorgesehen, welche zur Schwenkwinkelbegrenzung des Spannhebels 13 dient. Dies ist bei der Ausführung der Spannfläche als Exzenter von Bedeutung, um die Hebelverschwenkung bei der höchsten Spannkraft zu begrenzen.

Diese Anschlagfläche 23 schlägt damit am Außendurchmesser des Kopfbolzens 11 an.

Im Bereich des Ansatzes 29 ist hierbei ein Bund 37 angeordnet, welche der Verliersicherung der Auflagescheibe 10 auf dem Kopfbolzen 11 dient.

Hierbei greift der Kopfbolzen durch die entsprechend kontrollierte Ausnehmung (siehe Kontur 34) der Auflagescheibe gemäß Figur 12 hindurch und ist dort verliersicher gehalten.

Hierbei greift der Bund 37 in die Unterseite der Ausnehmung 33 ein. An dieser Ausnehmung 33 schließt sich die kontrollierte Ausnehmung 32 zur Verdrehsicherung an.

Die Seitenflächen 30 greifen also durch die zugeordnete Kontur 34 in den Bereich der Ausnehmung 32 hindurch und der Bund 37 legt sich an der inneren Stirnseite der Ausnehmung 33 an, um so eine Verliersicherheit der Höhenverstellelemente (Auflagescheibe 10) auf den Kopfbolzen 11 zu gewährleisten.

Der Außenumfang der Auflagescheibe 10 weist hierbei ein Außengewinde 36 auf, in welches die Auflagescheibe 10 in das zugeordnete Innengewinde 21 im Bereich der Ausnehmung 20 in der Stellmutter 9 eingeschraubt wird.

Somit ist die Auflagescheibe 10 höheneinstellbar in Bezug zur Stellmutter 9 ausgebildet.

Statt dem gesagten Bund 37 zur Verliersicherheit können auch andere bekannte Merkmale verwendet werden, wie z. B. ein Sprengring, der sich ebenfalls an der Innenseite der Auflagescheibe 10 anlegt und diese gegen axiales Wegfallen sichert.

Es ergibt sich hierdurch ein schönes, geschlossenes Spannelement, bei dem alle Teile verliergesichert gehalten sind.

Die Oberseite der Auflagescheibe 10 weist im übrigen zwei zueinander gegenüberliegende und zueinander fluchtende Klemmflächen 35 auf, die beispielsweise als Halbrundflächen ausgebildet sind. In diese Halbrundflächen greift somit die Spannkontur 14 des Spannhebels 13 ein und führt dort zur Spannung.

Bevorzugt ist diese Oberseite der Klemmfläche 35 mit einem PTFE-Material beschichtet, um eine möglichst reibungsarme Klemmung zu erreichen.

Es können selbstverständlich auch andere Kunststoffe verwendet werden, oder es kann insgesamt eine Kunststoffscheibe auf die Oberfläche aufgelegt werden.

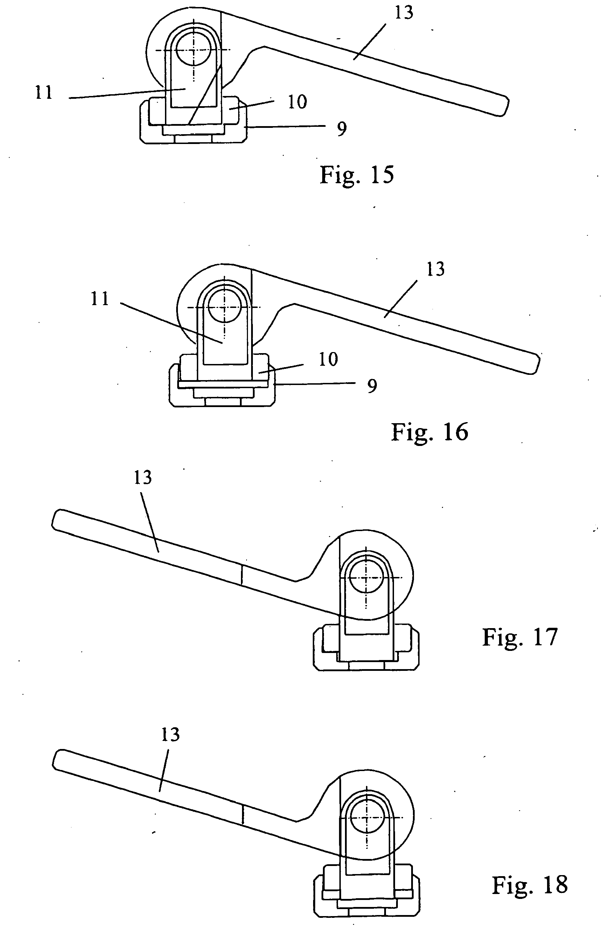

Die Figuren 15 bis 18 zeigen verschiedene Spannstellungen und die Vorteile der Erfindung insgesamt.

In Figur 15 ist dargestellt, dass der Spannhebel 13 bereits schon seine maximale Spannstellung erreicht hat, wobei das Höheneinstelllager, gebildet aus der höheneinstellbaren Auflagescheibe 10 in seine minimale Position in die Stellmutter 9 hineingeschraubt ist.

Die Figur 16 zeigt eine andere Spannlage, bei der erkennbar ist, dass nun die Auflagescheibe 10 aus der Stellmutter 9 herausgeschraubt ist und hierbei ebenfalls der Spannhebel 13 gespannt ist.

Die Figur 17 zeigt die gleiche Darstellung wie Figur 15 bei entspanntem Spannhebel 13 und die Figur 18 zeigt die entspannte Stellung gemäß Figur 16.

Aus dem Vergleich dieser Abbildungen nach den Figuren 15 bis 18 ergibt sich der wesentliche Vorteil der Erfindung, nämlich dass es durch einfaches Verdrehen der Stellmutter 9 nun möglich ist, ein höhenverstellbares Gegenlager zu erreichen, welches nicht mehr im Bereich des Querbolzens angeordnet ist und welches auch nicht mehr an der Unterseite der Grundplatte 1 gehalten beziehungsweise verstellt werden muss.

Es ist leicht zugänglich, kann leicht betätigt werden, indem beispielsweise mit der Hand oder mit einem Schlüssel gedreht wird, und es ist besonders feinfühlig einstellbar, weil bevorzugt das Innengewinde 21 als Feingewinde ausgebildet ist.

Die Auflagescheibe 10 kann auch als Kunststoffteil ausgebildet sein.

Wichtig ist also die Verdrehsicherung der Auflagescheibe 10 auf dem Kopfbolzen 11, weil es nun möglich ist, den Spannhebel 13 in einer entspannten Lage nach Figur 17 und 18 zu halten und hierbei die Stellmutter 9 nun in eine derartige Höheneinstelllage zu bringen, dass sich die Auflagescheibe 10 kraftschlüssig an die Unterseite des noch in der Entspannlage befindlichen Spannhebels 13 anlegt.

Der Spannhebel 13 kann dann in der gewünschten Spannausrichtung gespannt werden, wodurch es nun nicht mehr erforderlich ist, den Spannhebel noch zusätzlich zu verdrehen.

Dies ist der wesentliche Vorteil der Erfindung, dass eine bestimmte, gewünschte Drehlage des Spannhebels 13 (Orientierungslage) nun stets beibehalten werden kann, weil die erforderliche Spannstellung durch Einstellung der Stellmutter 9 im Bezug zur Auflagescheibe 10 hergestellt werden kann.

Die Relativbewegung zwischen der Stellmutter 9 und der Auflagescheibe 10 wird dann bei mit der Hand festgehaltenem Spannhebel 13 bewerkstelligt. Dies ist eine besonders einfache Maßnahme, die besondere Vorteile gegenüber den herkömmlichen Spannbewegungen hat.

Unabhängig von der Dicke der zu klemmenden Platte 2 kann somit stets die optimale Spannlage zunächst in entspanntem Zustand mit genau ausgerichtetem Spannhebel 13 hergestellt werden, um dann diesen Spannhebel in genau der vorher eingestellten Orientierungslage zu spannen.

### Zeichnungslegende

- 1: Grundplatte
- 2: Klemmplatte
- 3: Gewindebohrung
- 4: Bohrung
- 5: Gewindebolzen
- 6: Gewindebolzen
- 7: Zugbolzen
- 8: Mutter (oder Schraubenkopf)
- 9: Stellmutter
- 10: Auflagescheibe
- 11: Kopfbolzen
- 12: Querbolzen
- 13: Spannhebel
- 14: Spannkontur (Exzenter oder Spirale)
- 15: Spannfläche
- 16: Durchgangsbohrung
- 17: Bohrungsdurchmesser
- 18: Bohrungsdurchmesser
- 19: Bohrungsdurchmesser
- 20: Bohrungsdurchmesser
- 21: Innengewinde
- 22: Rändelfläche (oder Schlüsselweite)
- 23: Anschlagfläche
- 24: Klemmteil
- 25: Ausnehmung
- 26: Rundteil
- 27: Querbohrung
- 28: Innengewinde
- 29: Ansatz
- 30: Seitenfläche
- 31: Längsbohrung
- 32: Ausnehmung
- 33: Ausnehmung
- 34: Kontur
- 35: Klemmfläche
- 36: Außengewinde
- 37: Bund
- 38: Schräge
- 39: Kante
- 40: Anschlagfläche

## Patentansprüche

1. Klemmhebel mit höhenverstellbarem Gegenlager (9, 10) zur Ausführung einer Klemmbewegung an einer Spannvorrichtung mit einem Spannhebel (13), welcher mittels einem durchgreifenden Querbolzen (12) an einem Kopfbolzen (11) drehbar gelagert ist, wobei das einer Spannkontur (14) des Spannhebels (13) zugeordnete Gegenlager (9, 10) höheneinstellbar ausgebildet ist, und der Spannhebel (13) eine Schwenkwinkelbegrenzung zum Kopfbolzen (11) aufweist, und wobei das Gegenlager (9, 10) aus einer Auflagescheibe (10) und einer Stellmutter (9) gebildet ist, und die Stellmutter (9) ein Gewinde (21) aufweist, in welches ein Gewinde (36) der Auflagescheibe (10) eingreift und somit in Bezug auf die Stellmutter (9) höheneinstellbar gehalten ist, und wobei der Kopfbolzen (11) verdrehsicher in einer zugeordneten und in der Formgebung angepasste Ausnehmung (32) in der Auflagescheibe (10) hindurchgreift, wobei die Auflagescheibe (10) entlang der axialen Länge des Kopfbolzens (11) frei verschiebbar ist, **dadurch gekennzeichnet dass** der Querbolzen (12) in einer Querbohrung (27) des Kopfbolzens (11) verdrehungsgesichert gehalten ist und dass der Kopfbolzen (11) ein in einer Längsbohrung (31) angeordnetes Innengewinde (28) aufweist, welches zur Aufnahme von Gewindebolzen (6, 7) ausgebildet ist und dass der Kopfbolzen (11) an der Unterseite einen Ansatz (29) aufweist in dessen Bereich einen Bund (37) oder einen Sprengring vorgesehen ist, welcher zur Verliersicherung der Auflagescheibe (10) auf dem Kopfbolzen (11) ausgebildet ist.

2. Klemmhebel nach Anspruch 1, **dadurch gekennzeichnet, dass** der Kopfbolzen (11) eine rundzylindrische Form aufweist, welcher sich über die gesamte Länge des Kopfbolzens (11) erstreckt und an der Unterseite den Ansatz (29) aufweist, jenseits dessen zwei zueinander parallele Seitenflächen (30) angeordnet sind, welche eine geringere Weite als der Ansatz (29) aufweisen.

3. Klemmhebel nach einem der Ansprüche 1 oder 2, **dadurch gekennzeichnet, dass** die Stellmutter (9) freidrehbar auf einer Klemmplatte (2) anordenbar ist und ein Innengewinde (21) aufweist, in welches das Außengewinde (36) der Auflagescheibe (10) eingreift und somit in Bezug auf die Stellmutter (9) höheneinstellbar gehalten ist.

4. Klemmhebel nach einem der Ansprüche 1 oder 2, **dadurch gekennzeichnet, dass** die Stellmutter (9) ein Außengewinde aufweist, welche in das zugeordnete Innengewinde der Auflagescheibe (10) eingreift und somit in Bezug auf die Auflagescheibe (10) höheneinstellbar gehalten ist.

5. Klemmhebel nach einem der Ansprüche 3 oder 4, **dadurch gekennzeichnet, dass** das Außengewinde oder das Innengewinde der Stellmutter (9) als zugeordnetes Feingewinde ausgebildet ist und eine feinfühlige Einstellung des höhenverstellbaren Gegenlagers (9, 10) für den Spannhebel (13) aufweist.

6. Klemmhebel nach einem der Ansprüche 1 bis 5, **dadurch gekennzeichnet, dass** der Spannhebel (13) eine Klemmplatte (2) auf einer Grundplatte (1) klemmen kann, wobei die Grundplatte (1) eine Gewindebohrung (3) aufweist, in welche ein Gewindebolzen (6) mit einem zugeordneten Außengewinde eingreift und eine unvorbereitete Bohrung (4) in der Klemmplatte (2) mit Spiel durchgreift und dass das obere Ende des Gewindebolzens (6) in das zugeordnete Innengewinde (28) des Kopfbolzens (11) eingreift.

7. Klemmhebel nach einem der Ansprüche 1 bis 6, **dadurch gekennzeichnet, dass** der Klemmhebel eine Klemmplatte (2) auf einer Grundplatte (1) klemmen kann, wobei die Grundplatte (1) und die Klemmplatte (2) unvorbereitete und zueinander fluchtende Bohrungen (4) aufweisen, welche von einem Zugbolzen (7) durchsetzt sind, wobei der Zugbolzen (7) an seinem vorderen freien Ende entweder ein Gewinde aufweist, welche in eine Mutter (8) eingeschraubt ist oder einen Schraubenkopf aufweist, welcher an seinem zweiten Ende mit einem angeordneten Außengewinde in das zugeordnete Innengewinde (28) des Kopfbolzens (11) eingreift.

8. Klemmhebel nach einem der Ansprüche 1 bis 7, **dadurch gekennzeichnet, dass** der Spannhebel (13) zwei Klemmteile (24) aufweist, welche den Querbolzen (12) umgreifen und eine Spannkontur (14) mit einer Exzenter-Spannfläche (15) bildet.

9. Klemmhebel nach Anspruch 8, **dadurch gekennzeichnet, dass** die Spannkontur (14) als Spirale ausgebildet ist, wobei die Steigung der Spannkontur (14) gleichmäßig zunehmend über einen gesamten Schwenkwinkel des Spannhebels (13) in Bezug auf eine Drehachse des Spannhebels (13) ist.

10. Klemmhebel nach einem der Ansprüche 8 oder 9, **dadurch gekennzeichnet, dass** im Bereich der Spannkontur (14) Vorsprünge und Noppen, Riefen oder dergleichen angeordnet sind, welche rastende Spannflächen bilden.

11. Klemmhebel nach einem der Ansprüche 1 bis 10, **dadurch gekennzeichnet, dass** die Unterseite der Stellmutter (9) als Spannfläche (15) ausgebildet ist, welche auf der Klemmplatte (2) aufliegt und eine Durchgangsbohrung (16) aufweist, welche aus mindestens vier unterschiedlichen Bohrungsdurchmessern (17, 18, 19, 20) gebildet ist, wobei einer der Bohrungsdurchmesser (20) das Innengewinde (21) zur Aufnahme der Auflagescheibe (10) aufweist.

12. Klemmhebel nach einem der Ansprüche 1 bis 11, **dadurch gekennzeichnet, dass** die obere Stirnseite des Kopfbolzens (11) als Rundteil (26) ausgebildet ist, welche durch die Ausnehmung (25) im Spannhebel (13) hindurchgreift.

13. Klemmhebel nach einem der Ansprüche 1 bis 12, **dadurch gekennzeichnet, dass** der Spannhebel (13) im Bereich des Schwenkweges eine Anschlagfläche (23) zur Schwenkwinkelbegrenzung des Spannhebels (13) aufweist, welche am Außendurchmesser des Kopfbolzens (11) anschlägt.

14. Klemmhebel nach einem der Ansprüche 1 bis 13, **dadurch gekennzeichnet, dass** die Auflagescheibe (10) an ihrer Oberseite zwei zueinander gegenüberliegende und zueinander fluchtende Klemmflächen (35) aufweist, welche als Halbrundflächen ausgebildet sind, in deren Flächen die Spannkontur (14) des Spannhebels (13) eingreift und zur Spannung führt, wobei die Oberflächen der Klemmflächen (35) mit einer Kunststoffbeschichtung zur reibungsarmen Klemmung ausgebildet sind.

15. Klemmhebel nach einem der Ansprüche 1 bis 14, **dadurch gekennzeichnet, dass** das höhenverstellbare Gegenlager (9, 10) außerhalb des Bereiches des Querbolzens (12) angeordnet ist.

## Claims

1. Clamping lever with a height-adjustable thrust bearing (9, 10) for carrying out a clamping movement on a tensioning device with a tensioning lever (13), which is rotatably mounted on a head bolt (11) by means of a penetrating cross bolt (12), wherein the thrust bearing (9, 10) associated with a tensioning contour (14) of the tensioning lever (13) is height-adjustable, and the tensioning lever (13) has a pivoting angle limitation with respect to the head bolt (11), and wherein the thrust bearing (9, 10) is formed from a washer (10) and an adjusting nut (9), and the adjusting nut (9) has a thread (21), in which a thread (36) of the washer (10) engages and therefore is height-adjustably held in relation to the adjusting nut (9), and wherein the head bolt (11) engages in a torsion-resistant manner through an associated recess (32) adapted with respect to shaping in the washer (10), the washer (10) being freely displaceable along the axial length of the head bolt (11), **characterised in that** the cross bolt (12) is held secured against torsion in a cross hole (27) of the head bolt (11) and **in that** the head bolt (11) has an internal thread (28) arranged in a longitudinal hole (31), which internal thread is configured to received threaded bolts (6, 7) and **in that** the head bolt (11) has, on the lower side, an attachment piece (29), in the region of which a collar (37) or a snap ring is provided, which is configured to secure the washer (10) against being lost on the head bolt (11).

2. Clamping lever according to claim 1, **characterised in that** the head bolt (11) has a round cylindrical shape, which extends over the entire length of the head bolt (11) and, on the lower side, has the attachment piece (29), on the other side of which two mutually parallel side faces (30) are arranged, which have a smaller width than the attachment piece (29).

3. Clamping lever according to either of claims 1 or 2, **characterised in that** the adjusting nut (9) can be freely-rotatably arranged on a clamping plate (2) and has an internal thread (21), in which the external thread (36) of the washer (10) engages and is thus height-adjustably held in relation to the adjusting nut (9).

4. Clamping lever according to either of claims 1 or 2, **characterised in that** the adjusting nut (9) has an external thread, which engages in the associated internal thread of the washer (10) and is thus height-adjustably held in relation to the washer (10).

5. Clamping lever according to either of claims 3 or 4, **characterised in that** the external thread or the internal thread of the adjusting nut (9) is configured as an associated fine thread, and has a sensitive adjustment of the height-adjustable thrust bearing (9, 10) for the tensioning lever (13).

6. Clamping lever according to any one of claims 1 to 5, **characterised in that** the tensioning lever (13) can clamp a clamping plate (2) on a base plate (1), the base plate (1) having a threaded hole (3), in which a threaded bolt (6) with an associated external thread engages and engages through an unprepared hole (4) in the clamping plate (2) with play and **in that** the upper end of the threaded bolt (6) engages in the associated internal thread (28) of the head bolt (11).

7. Clamping lever according to any one of claims 1 to 6, **characterised in that** the clamping lever can clamp a clamping plate (2) on a base plate (1), the base plate (1) and the clamping plate (2) having unprepared and mutually aligned holes (4), which are penetrated by a tension bolt (7), the tension bolt (7) having, at its front free end, either a thread, which is screwed into a nut (8), or having a screw head, which engages, at its second end, with an arranged external thread in the associated internal thread (28) of the head bolt (11).

8. Clamping lever according to any one of claims 1 to 7, **characterised in that** the tensioning lever (13) has two clamping parts (24), which engage around the cross bolt (12) and form a tensioning contour (14) with an eccentric tensioning face (15).

9. Clamping lever according to claim 8, **characterised in that** the tensioning contour (14) is configured as a spiral, the pitch of the tensioning contour (14) increasing uniformly over an entire pivoting angle of the tensioning lever (13) in relation to an axis of rotation of the tensioning lever (13).

10. Clamping lever according to either of claims 8 or 9, **characterised in that** projections and knobs, grooves or the like, which form locking tensioning faces, are arranged in the region of the tensioning contour (14).

11. Clamping lever according to any one of claims 1 to 10, **characterised in that** the lower side of the adjusting nut (9) is configured as a tensioning face (15), which rests on the clamping plate (2) and has a through-hole (16), which is formed from at least four different hole diameters (17, 18, 19, 20), one of the hole diameters (20) having the internal thread (21) to receive the washer (10).

12. Clamping lever according to any one of claims 1 to 11, **characterised in that** the upper end face of the head bolt (11) is configured as a round part (26), which engages through the recess (25) in the tensioning lever (13).

13. Clamping lever according to any one of claims 1 to 12, **characterised in that** the tensioning lever (13), in the region of the pivoting path, has a stop face (23) for pivoting angle limitation of the tensioning lever (13), which stop face stops against the external diameter of the head bolt (11).

14. Clamping lever according to any one of claims 1 to 13, **characterised in that** the washer (10), on its upper side, has two opposing and mutually aligned clamping faces (35), which are configured as semicircular faces, in the faces of which the tensioning contour (14) of the tensioning lever (13) engages and leads to tensioning, the surfaces of the clamping faces (35) being configured with a plastics material coating for low-friction clamping.

15. Clamping lever according to any one of claims 1 to 14, **characterised in that** the height-adjustable thrust bearing (9, 10) is arranged outside the region of the cross bolt (12).

## Revendications

1. Levier de blocage avec un palier (9, 10) réglable en hauteur, pour décrire un mouvement de blocage sur un dispositif de serrage avec un levier de serrage (13) qui est monté sur un axe supérieur (11) de manière à pouvoir pivoter à l'aide d'un axe transversal traversant (12), étant précisé que le palier (9, 10) associé à un contour de serrage (14) du levier de serrage (13) est conçu pour être réglable en hauteur et que le levier de serrage (13) présente une limitation d'angle de pivotement par rapport à l'axe supérieur (11), que le palier (9, 10) se compose d'une plaque d'appui (10) et d'un écrou de réglage (9) et que l'écrou de réglage (9) présente un filetage (21) dans lequel un filetage (36) de la plaque d'appui (10) vient en prise et est ainsi fixée en étant réglable en hauteur par rapport à l'écrou de réglable (9), que l'axe supérieur (11) traverse, fixe en rotation, un creux associé (32) prévu dans la plaque d'appui (10) et de forme adaptée, et que la plaque d'appui (10) est apte à coulisser librement le long de la longueur axiale de l'axe supérieur (11), **caractérisé en ce que** l'axe transversal (12) est retenu, fixe en rotation, dans un perçage transversal (27) de l'axe supérieur (11), **en ce que** l'axe supérieur (11) présente un filetage intérieur (28) qui est disposé dans un perçage longitudinal (31) et qui est conçu pour recevoir des axes filetés (6, 7), et **en ce que** l'axe supérieur (11) présente sur son côté inférieur une embase (29) dans la zone de laquelle est prévu un collet (37) ou un jonc d'arrêt qui est conçu pour le blocage imperdable la plaque d'appui (10) sur l'axe supérieur (11).

2. Levier de blocage selon la revendication 1, **caractérisé en ce que** l'axe supérieur (11) présente une forme cylindrique ronde qui s'étend sur toute la longueur dudit axe supérieur (11) et présente sur son côté inférieur l'embase (29) au-delà de laquelle sont disposées deux surfaces latérales (30) parallèles qui présentent une plus petite largeur que ladite embase (29).

3. Levier de blocage selon l'une des revendications 1 ou 2, **caractérisé en ce que** l'écrou de réglage (9) est apte à être disposé, librement mobile, sur une plaque de blocage (2) et présente un filetage inférieur (21) dans lequel le filetage extérieur (36) de la plaque d'appui (10) vient en prise et est ainsi fixé en pouvant être réglé en hauteur par rapport à l'écrou de réglage (9).

4. Levier de blocage selon l'une des revendications 1 ou 2, **caractérisé en ce que** l'écrou de réglage (9) présente un filetage extérieur qui vient en prise dans le filetage intérieur associé de la plaque d'appui (10) et est ainsi fixé en étant réglable en hauteur par rapport à la plaque d'appui (10).

5. Levier de blocage selon l'une des revendications 3 ou 4, **caractérisé en ce que** le filetage extérieur ou le filetage intérieur de l'écrou de réglage (9) est conçu comme un filetage fin associé, et présente un réglage fin du palier (9, 10) réglable en hauteur pour le levier de serrage (13).

6. Levier de blocage selon l'une des revendications 1 à 5, **caractérisé en ce que** le levier de serrage (13) peut bloquer une plaque de blocage (2) sur une plaque de base (1), la plaque de base (1) présentant un perçage fileté (3) dans lequel un axe fileté (6) pourvu d'un filetage extérieur associé vient en prise et traverse avec du jeu un perçage (4) non préparé prévu dans la plaque de blocage (2), et **en ce que** l'extrémité supérieure de l'axe fileté (6) vient en prise dans le filetage intérieur associé (28) de l'axe supérieur (11).

7. Levier de blocage selon l'une des revendications 1 à 6, **caractérisé en ce qu'**il peut bloquer une plaque de blocage (2) sur une plaque de base (1), la plaque de base (1) et la plaque de blocage (2) présentant des perçages (4) non préparés et alignés qui sont traversés par un tirant (7), le tirant (7) présentant à son extrémité libre avant soit un filetage qui est vissé dans un écrou (8), soit une tête de vis qui vient en prise à sa seconde extrémité, grâce à un filetage extérieur, dans le filetage intérieur associé (28) de l'axe supérieur (11).

8. Levier de blocage selon l'une des revendications 1 à 7, **caractérisé en ce que** le levier de serrage (13) présente deux éléments de serrage (24) qui enserrent l'axe transversal (12), et forme un contour de serrage (14) avec une surface de serrage excentrique (15).

9. Levier de blocage selon la revendication 8, **caractérisé en ce que** le contour de serrage (14) est conçu comme une spirale, le pas du contour de serrage (14) allant en augmentant régulièrement sur tout un angle de pivotement du levier de serrage (13) par rapport à un axe de rotation dudit levier de serrage (13).

10. Levier de blocage selon l'une des revendications 8 ou 9, **caractérisé en ce qu'**il est prévu dans la zone du contour de serrage (14) des saillies et des bosses, des rainures ou des structures similaires, qui forment des surfaces desserrage par encliquetage.

11. Levier de blocage selon l'une des revendications 1 à 10, **caractérisé en ce que** le côté inférieur de l'écrou de réglage (9) est conçu comme une surface de serrage (15) qui est posée sur la plaque de blocage (2) et présente un perçage traversant (16) qui est formé d'au moins quatre diamètres différents (17, 18, 19, 20), l'un des diamètres de perçage (20) présentant le filetage intérieur (21) pour recevoir la plaque d'appui (10).

12. Levier de blocage selon l'une des revendications 1 à 11, **caractérisé en ce que** le côté frontal supérieur de l'axe supérieur (11) est conçu comme un élément arrondi (26) qui traverse le creux (25) prévu dans le levier de serrage (13).

13. Levier de blocage selon l'une des revendications 1 à 12, **caractérisé en ce que** le levier de serrage (13) présente dans la zone de la course de pivotement une surface de butée (23), pour limiter l'angle de pivotement du levier de serrage (13), qui bute contre le diamètre extérieur de l'axe supérieur (11).

14. Levier de blocage selon l'une des revendications 1 à 13, **caractérisé en ce que** la plaque d'appui (10) présente sur son côté supérieur deux faces de blocage (35) opposées et alignées qui sont conçues comme des surfaces semi-circulaires et dans les surfaces desquelles le contour de blocage (14) du levier de blocage (13) vient en prise et entraîne le serrage, les surfaces des faces de blocage (35) étant pourvues d'un revêtement en matière plastique pour un blocage avec peu de frottement.

15. Levier de blocage selon l'une des revendications 1 à 14, **caractérisé en ce que** le palier (9, 10) réglable en hauteur est disposé en dehors de la zone de l'axe transversal (12).
